# EUROPEAN PATENT SPECIFICATION

(11) **EP 4 557 192 B1**
(45) Date of publication and mention of the grant of the patent: **15.04.2026**
(21) Application number: 24210077.4
(22) Date of filing: 31.10.2024
(51) Int. Cl.: G06Q 10/08, B65G 1/137, B65G 61/00, B65G 65/00

(54) **METHOD AND APPARATUS FOR ADJUSTING A WAREHOUSE LOCATION AND ELECTRONIC DEVICE**
VERFAHREN UND VORRICHTUNG ZUR EINSTELLUNG EINES LAGERPLATZES UND ELEKTRONISCHE VORRICHTUNG
PROCÉDÉ ET APPAREIL DE RÉGLAGE D'EMPLACEMENT D'ENTREPÔT ET DISPOSITIF ÉLECTRONIQUE

(30) Priority: 15.11.2023 CN 202311528283
(43) Date of publication of application: 21.05.2025
(73) Proprietor: Hangzhou Hikrobot Co., Ltd., Hangzhou, Zhejiang 310051 (CN)
(72) Inventor: SHOU, Senfeng, Hangzhou, 310051 (CN)
(74) Representative: Epping - Hermann - Fischer

(56) References cited:
- EP-A1- 4 265 543
- WO-A1-2022/135135
- US-B2- 11 479 414

## Description

### Technical Field

The present application relates to the technical field of intelligent warehousing, particularly to a method and an apparatus for adjusting a warehouse location and an electronic device.

### Background

With the rapid development of robotics technology, robots have been widely used in various industries and have become an important part of assisting the development of enterprises.

In the field of intelligent warehousing, it is becoming increasingly common for robots to replace manual labor in handling goods. In a warehousing system, there are often a large number of workbins arranged in the warehouse for storing goods, and the workbins filled with goods are stored in warehouse locations in the shelf area. Robots can move the workbins from the shelf area to an operating table, where the goods will be sorted manually according to the order, to complete the ex-warehoused delivery of goods; the robot can also return the workbins from the operating table back to the warehouse location on the shelf, to complete the in-warehoused receipt of goods. At present, there is a problem of poor flexibility in the return of goods by robots, and the overall processing efficiency of the system is low.

US11479414B2 provides processes for dynamically sorting and storing items in a warehouse without the need for presorting items and without delaying or negatively impacting the efficiency of operators in the warehouse. Items are individually scanned and placed in totes of a tote-array provided on a mobile robot. An optimized route is calculated based on the items in the tote-array, and the robot navigates to a first location on the route. When the item has been put away, a replacement item is placed in the just-emptied tote of the tote-array, and an updated route is calculated. A robot capable of navigating to predefined locations for storing items is a warehouse is provided.

EP4265543A1 provides an order processing method, apparatus, and device, a system, and a storage medium. The order processing method includes: in a case that a second order is detected and a priority of the second order is higher than a priority of at least one first order, obtaining a material container of a first order in a buffer area, where each of the at least one first order is an order that is currently being executed and whose execution is not completed, and the material container of the first order is at least one material container of material containers corresponding to the at least one first order; and determining a first transport strategy of the second order according to the material container of the first order and a requirement of the second order, so as to complete the second order according to the first transport strategy. A transport strategy of a material container of a higher-priority order is formulated based on a transported material container of a lower-priority order, which improves the flexibility and efficiency of order processing in the warehousing system and improves user experience.

### Summary

The object of the embodiments of the present application is to provide a method and an apparatus for adjusting a warehouse location and an electronic device, to improve the efficiency of robots with multiple storage compartments in returning workbins, thereby improving the overall processing efficiency of the warehousing system. The specific technical solutions are as follows:
The invention is set out in the appended claims.

Beneficial effects of the embodiments of the present application are as follows:
As can be seen above, by applying the solution provided by the embodiments of the present application, when using the robot with multiple storage compartments to return workbins, first, the target robot can be instructed to load to-be-in-warehoused workbins and determine a binding relationship between the to-be-in-warehoused workbins and in-warehouse locations for the to-be-in-warehoused workbins; then, during a process of the target robot returning the to-be-in-warehoused workbins, when the target robot has an empty storage compartment, the target robot can be instructed to load a to-be-ex-warehoused workbin in the empty storage compartment; then, after the target robot transfers the to-be-ex-warehoused workbin from a specified warehouse location to its own empty storage compartment, the target robot can be instructed to transfer a currently loaded target to-be-in-warehoused workbin to the specified warehouse location, and release a binding relationship between the target to-be-in-warehoused workbin and an in-warehouse location for the target to-be-in-warehoused workbin.

Based on this, by applying the solution provided by the embodiments of the present application, during the process of the robot with multiple storage compartments returning to-be-in-warehoused workbins, if the robot is instructed to load a to-be-ex-warehoused workbin in its own empty storage compartment, a warehouse location in the shelf area where the to-be-ex-warehoused workbin was originally stored becomes an available warehouse location, and this available warehouse location can be used to store a to-be-in-warehoused workbin loaded by the robot. Therefore, the robot can use this warehouse location to store the to-be-in-warehoused workbin loaded by itself, without moving to an in-warehouse location bound to this to-be-in-warehoused workbin. In this way, by using the newly available warehouse location in the shelf area as a warehouse location for the to-be-in-warehoused workbin, the flexibility in warehouse location allocation is achieved, thereby saving the total distance and total time for the robot returning the to-be-in-warehoused workbins, improving the efficiency of the robot returning the to-be-in-warehoused workbins, and improving the overall processing efficiency of the warehousing system; in addition, the robot is instructed to load to-be-ex-warehoused workbins during the return process, which further improves the overall processing efficiency of the warehousing system.

### Brief Description of the Drawings

In order to more clearly describe the technical solutions in the embodiments of the present application or the prior art, accompanying drawings that need to be used in the embodiments or the prior art will be briefly described below. Obviously, the accompanying drawings described below are for only some of the embodiments of the present application. For those skilled in the art, they may also obtain other embodiments based on these accompanying drawings.
Figure 1 is a flow chart of a method for adjusting a warehouse location provided by an embodiment of the present application;
Figures 2(a) to 2(b) are schematic diagrams of specific instances of a method for adjusting a warehouse location provided by an embodiment of the present application, respectively;
Figure 3 is a flow chart of another method for adjusting a warehouse location provided by an embodiment of the present application;
Figure 4 is a flow chart of yet another method for adjusting a warehouse location provided by an embodiment of the present application;
Figure 5 is a flow chart of yet another method for adjusting a warehouse location provided by an embodiment of the present application;
Figure 6 is a structural schematic diagram of an apparatus for adjusting a warehouse location provided by an embodiment of the present application;
Figure 7 is a structural schematic diagram of an electronic device provided by an embodiment of the present application.

### Detailed Description

The technical solutions in the embodiments of the present application will be clearly and completely described below with reference to the accompanying drawings in the embodiments of the present application. Obviously, the described embodiments are only some, and not all, of the embodiments of the present application. Based on the embodiments of the present application, all other embodiments obtained by those of ordinary skill in the art based on the present application fall into the scope of protection of the present application.

In the field of intelligent warehousing, it is becoming increasingly common for robots to replace manual labor in handling goods. In a warehousing system, there are often a large number of workbins arranged in the warehouse for storing goods, and the workbins filled with goods are stored in warehouse locations in the shelf area. Robots can move the workbins from the shelf area to an operating table, where the goods will be sorted manually according to the order, to complete the ex-warehoused delivery of goods; the robot can also return the workbins from the operating table back to the warehouse location on the shelf, to complete the in-warehoused receipt of goods. At present, there is a problem of poor flexibility in the return of goods by robots, and the overall processing efficiency of the system is low.

In order to solve the aforementioned technical problems, an embodiment of the present application provides a method for adjusting a warehouse location.

Wherein, the method can be adapted to various application scenarios that require a robot with multiple storage compartments to return workbins. For example, in a factory, a robot with multiple storage compartments can be used to return each workbin for storing raw materials to a corresponding warehouse location in the shelf area; in a parcel sorting center, a robot with multiple storage compartments can be used to return each workbin for storing a parcel to a corresponding warehouse location in the storage area. Moreover, this method can be applied to a robot with multiple compartments itself, for example, a control module is installed in the robot with multiple compartments to carry out the method; it can also be applied to an electronic device that can communicate with and control the robot with multiple storage compartments, such as a robot management server and so on. Based on this, the embodiment of the present application does not specifically limit the application scenario and execution subject of the method.

The method for adjusting a warehouse location provided by the embodiment of the present application can include following steps:
instructing a target robot to load to-be-in-warehoused workbins, and determining a binding relationship between the to-be-in-warehoused workbins and in-warehouse locations for the to-be-in-warehoused workbins; wherein the target robot is a robot with multiple storage compartments;
during a process of the target robot returning the to-be-in-warehoused workbins, when the target robot has an empty storage compartment, instructing the target robot to load a to-be-ex-warehoused workbin in the empty storage compartment;
after the target robot transfers the to-be-ex-warehoused workbin from a specified warehouse location to its own empty storage compartment, instructing the target robot to transfer a currently loaded target to-be-in-warehoused workbin to the specified warehouse location, and releasing a binding relationship between the target to-be-in-warehoused workbin and an in-warehouse location for the target to-be-in-warehoused workbin.

As can be seen above, by applying the solution provided by the embodiment of the present application, when using the robot with multiple storage compartments to return workbins, first, the target robot can be instructed to load the to-be-in-warehoused workbins and determine a binding relationship between the to-be-in-warehoused workbins and the in-warehouse locations for the to-be-in-warehoused workbins; then, during the process of the target robot returning the to-be-in-warehoused workbins, when the target robot has an empty storage compartment, the target robot can be instructed to load a to-be-ex-warehoused workbin in the empty storage compartment; then, after the target robot transfers the to-be-ex-warehoused workbin from a specified warehouse location to its own empty storage compartment, the target robot can be instructed to transfer a currently loaded target to-be-in-warehoused workbin to the specified warehouse location, and release a binding relationship between the target to-be-in-warehoused workbin and an in-warehouse location for the target to-be-in-warehoused workbin.

Based on this, by applying the solution provided by the embodiment of the present application, during the process of the robot with multiple storage compartments returning the to-be-in-warehoused workbins, if the robot is instructed to load a to-be-ex-warehoused workbin in its own empty storage compartment, a warehouse location in the shelf area where the to-be-ex-warehoused workbin was originally stored becomes an available warehouse location, and this available warehouse location can be used to store a to-be-in-warehoused workbin loaded by the robot. Therefore, the robot can use this warehouse location to store a to-be-in-warehoused workbin loaded by itself, without moving to an in-warehouse location bound to this to-be-in-warehoused workbin. In this way, by using the newly available warehouse location in the shelf area as a warehouse location for the to-be-in-warehoused workbin, the flexibility in warehouse location allocation is achieved, thereby saving the total distance and total time for the robot returning the to-be-in-warehoused workbins, improving the efficiency of the robot returning the to-be-in-warehoused workbins, and improving the overall processing efficiency of the warehousing system; in addition, the robot is instructed to load to-be-ex-warehoused workbins during the process of returning workbins, which further improves the overall processing efficiency of the warehousing system.

Below, in conjunction with the accompanying drawings, a specific explanation of a method for adjusting a warehouse location provided by an embodiment of the present application will be provided.

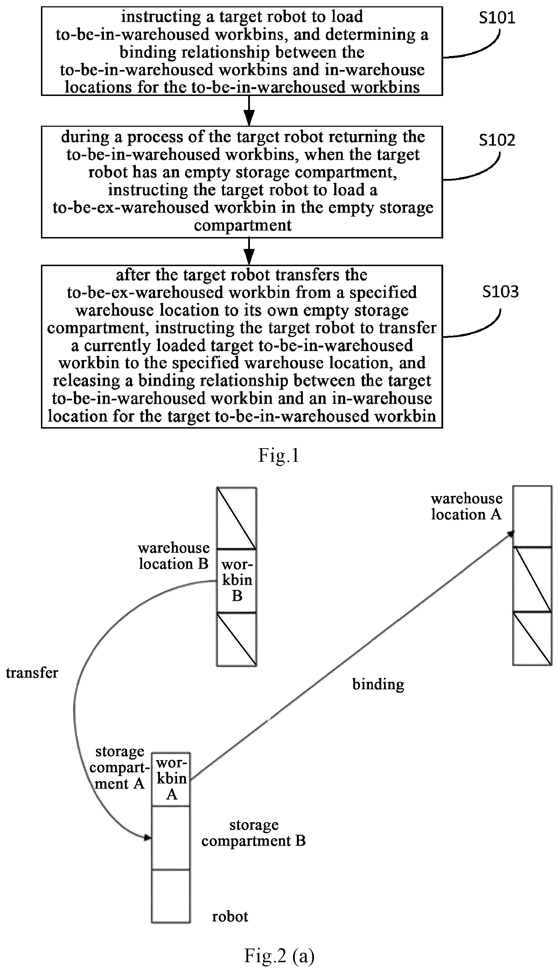

Figure 1 is a flow chat of a method for adjusting a warehouse location provided by an embodiment of the present application, as shown in Figure 1, the method can include the following steps S101-S103.

S101: instructing a target robot to load to-be-in-warehoused workbins, and determining a binding relationship between the to-be-in-warehoused workbins and in-warehouse locations for the to-be-in-warehoused workbins;
wherein, the target robot is a robot with multiple storage compartments.

Usually, in the field of intelligent warehousing, goods transported from various places are usually first placed together in a certain preset pre-warehousing area for pre-warehousing processing such as inventory and disinfection. For example, individual containers are placed in the goods sorting area of a logistics center for inventory.

After completing the pre-warehousing processing, individual goods will be placed in individual bins and returned to the warehouse locations in the shelf area for storage. Usually, there are various types of workbins placed in the shelf area, and individual bins are placed in various types of warehouse locations for storage. For example, the shelf area can include multiple shelves for storing different types of workbins, and each shelf can include multiple compartments, so that each compartment can serve as a warehouse location.

Accordingly, when goods are being ex-warehousing, individual bins can be taken out from various warehouse locations in the shelf area and moved to the operating table for goods sorting.

Taking the logistics industry as an example, logistics centers can receive goods from various parties, classify and organize the received goods, and then transfer them to various destinations. Usually, after receiving goods from various parties, the logistics centers can place the received goods in the goods sorting area and perform cleaning, sorting, and other sorting operations on the goods in this sorting area. Afterwards, the robot can move the respective goods that have completed the sorting operation from the goods sorting area to the operating table, where the goods are placed in the respective workbins and returned to respective warehouse locations in the shelf area for storage. Next, before the transportation of goods, the robot can take out each workbin from each warehouse location in the shelf area, and transport each workbin to the operating table, where the goods will be sorted manually according to the order, to complete the ex-warehoused delivery of goods. In this way, the sorted goods can be loaded onto trucks and then transported to various destinations.

Based on this, the workbins stored in the respective warehouse locations in the shelf area and waiting to be transported to an operating table is referred to as to-be-ex-warehoused workbins; bins to be returned to each warehouse location in the shelf area is referred to as to-be-in-warehoused workbins.

In order to return each to-be-in-warehoused workbin, firstly the robot can be instructed to load the to-be-in-warehoused workbin and determine a warehouse location in the shelf area for storing the to-be-in-warehoused workbin. Then, the robot can be instructed to return the to-be-in-warehoused workbin to the warehouse location.

Moreover, in order to improve the in-warehousing efficiency of to-be-in-warehoused workbins, the robot with multiple storage compartments can be used to perform the process of returning the to-be-in-warehoused workbins.

That is to say, in the embodiment of the present application, when using the target robot with multiple storage compartments to return each to-be-in-warehoused workbin, the target robot can first be instructed to load the to-be-in-warehoused workbin and determine a binding relationship between the to-be-in-warehoused workbin and an in-warehouse location for the to-be-in-warehoused workbin.

Optionally, the robot management server can store a list of to-be-in-warehoused workbins, which includes a workbin identification of each to-be-in-warehoused workbin and a binding relationship between the to-be-in-warehoused workbin and an in-warehouse location for the to-be-in-warehoused workbin. For each to-be-in-warehoused workbin in the list, the robot management server can generate a workbin returning task that carries a workbin identification of this to-be-in-warehoused workbin and a binding relationship, and send the workbin returning task to the target robot. In this way, after receiving the workbin returning task, the target robot can determine the binding relationship between this to-be-in-warehoused workbin and the in-warehouse location for this to-be-in-warehoused workbin, and then return this to-be-in-warehoused workbin based on the above information.

Optionally, the robot management server can store a list of to-be-in-warehoused workbins, which includes a workbin identification of each to-be-in-warehoused workbin, and a binding relationship between the to-be-in-warehoused workbin and an in-warehouse location for the to-be-in-warehoused workbin. For each to-be-in-warehoused workbin in the list, the robot management server can generate a workbin returning task that carries a workbin identification of this to-be-in-warehoused workbin and a binding relationship. When instructing the target robot to load each to-be-in-warehoused workbin, the workbin identification of this to-be-in-warehoused workbin can be obtained to detect whether there is a workbin returning task for this to-be-in-warehoused workbin among the generated individual workbin returning tasks. When the workbin returning task for this to-be-in-warehoused workbin is detected, the above binding relationship is sent to the target robot, and the target robot is instructed to execute the workbin returning task for this to-be-in-warehoused workbin.

Furthermore, the size, type, and storage conditions of different to-be-in-warehoused workbins can be different, so different to-be-in-warehoused workbins can be returned to different warehouse locations in the shelf area. Based on this, for each to-be-in-warehoused workbin, first an in-warehouse location can be allocated for this to-be-in-warehoused workbin in individual warehouse locations in the shelf area based on workbin information, such as size information, the weight of the workbin, type information, and storage condition information, and a binding relationship between this to-be-in-warehoused workbin and the in-warehouse location for the to-be-in-warehoused workbin can be established.

Wherein, when allocating an in-warehouse location for each to-be-in-warehoused workbin, the allocated in-warehouse location is a currently available warehouse location in the shelf area, and warehouse location information such as the type and size of the allocated in-warehouse location should match the workbin information about the to-be-in-warehoused workbin, that is, the in-warehouse location allocated for the to-be-in-warehoused workbin meets the storage requirements of the to-be-in-warehoused workbin.

For example, if a destination of the goods stored in the to-be-in-warehoused workbin A is city B, one warehouse location C can be allocated for the to-be-in-warehoused workbin A as the in-warehouse location for this to-be-in-warehoused workbin A from the individual warehouse locations in the shelf for storing goods sent to the city B.

For another example, if the size of the to-be-in-warehoused workbin D is 0.5m*0.6m*0.3m, a warehouse location E of 0.7m*0.7m*0.5m can be allocated for the to-be-in-warehoused workbin D as its warehouse location.

Therefore, the so-called available warehouse location mentioned above can refer to that the warehouse location is an empty warehouse location, or it can refer to that a workbin currently stored in the warehouse location is a to-be-ex-warehoused workbin.

Optionally, in order to avoid the situation where one warehouse location is allocated to multiple to-be-in-warehoused workbins, after allocating one warehouse location to one to-be-in-warehoused workbin, this warehouse location can be locked, that is, the status of this warehouse location can be set to unavailable, so that this warehouse location will not be allocated to other to-be-in-warehoused workbins.

Optionally, when multiple workbins can be stored in one warehouse location, after allocating this warehouse location to one to-be-in-warehoused workbin, updating the available status of this warehouse location, that is, updating the number of to-be-in-warehoused workbins to which this warehouse location can still be allocated, so as to subsequently determine whether this warehouse location can be allocated to other to-be-in-warehoused workbins.

As stated above, when it is desired to return each to-be-in-warehoused workbin, the target robot can be instructed to first load each to-be-in-warehoused workbin and determine the binding relationship between this to-be-in-warehoused workbin and an in-warehouse location for this to-be-in-warehoused workbin.

Optionally, when the executing subject of the embodiment of the present application is the target robot itself, the target robot may store available warehouse locations, and warehouse location information such as the size and type of each available warehouse location. Therefore, after loading each to-be-in-warehoused workbin, the target robot can obtain the workbin information of this to-be-in-warehoused workbin. Then, based on the warehouse location information of the available warehouse locations and the workbin information of this to-be-in-warehoused workbin mentioned above, the target robot can allocate an in-warehouse location for this to-be-in-warehoused workbin and establish a binding relationship between this to-be-in-warehoused workbin and the allocated in-warehouse location.

Optionally, when the executing subject of the embodiment of the present application is the target robot itself, the robot management server may store a list of to-be-in-warehoused workbins, available warehouse locations in the shelf area, and warehouse location information such as the size and type of each available warehouse location. Therefore, after loading a to-be-in-warehoused workbin, the target robot can send a warehouse location allocation request carrying the workbin identification of this to-be-in-warehoused workbin to the robot management server. In this way, the robot management server can determine the workbin information of the to-be-in-warehoused workbin based on the workbin identification. Then, based on the warehouse location information of each available warehouse location and the workbin information of the to-be-in-warehoused workbin, the robot management server can allocate an in-warehouse location for this to-be-in-warehoused workbin and establish a binding relationship between this to-be-in-warehoused workbin and the allocated in-warehouse location, and then send the above binding relationship to the target robot.

Optionally, when the executing subject of the embodiment of the present application is the robot management server, the robot management server may store a list of to-be-in-warehoused workbins, available warehouse locations in the shelf area, and warehouse location information such as the size and type of each available warehouse location. Therefore, for each to-be-in-warehoused workbin in the list of the to-be-in-warehoused workbins, based on the workbin information of this to-be-in-warehoused workbin, the robot management server can allocate an in-warehouse location for this to-be-in-warehoused workbin and establish a binding relationship between this to-be-in-warehoused workbin and the allocated in-warehouse location. Then, the robot management server can generate an in-warehoused task carrying the above binding relationship for this to-be-in-warehoused workbin and send the in-warehoused task to the target robot. In this way, the target robot can receive the aforementioned in-warehoused task and obtain the binding relationship mentioned above.

Of course, the above specific implementations are only examples of the method for establishing a binding relationship and the method for the target robot determining the binding relationship between each to-be-in-warehoused workbin and the in-warehouse location, and are not limiting.

Based on this, when the target robot returns to-be-in-warehoused workbins, the target robot can be first instructed to load the to-be-in-warehoused workbins and determine a binding relationship between the to-be-in-warehoused workbins and in-warehouse locations for the to-be-in-warehoused workbins. In this way, the target robot can be instructed to return the to-be-in-warehoused workbins to the in-warehouse locations bound to the to-be-in-warehoused workbins according to the above binding relationship.

S102: during a process of the target robot returning the to-be-in-warehoused workbins, when the target robot has an empty storage compartment, instructing the target robot to load a to-be-ex-warehoused workbin in the empty storage compartment.

During a process of the target robot returning the to-be-in-warehoused workbins, the target robot can be instructed to sequentially return each to-be-in-warehoused workbin to an in-warehouse location for this to-be-in-warehoused workbin.

For example, the target robot can be instructed to prioritize the return of the first loaded individual to-be-in-warehoused workbins in the order in which the individual to-be-in-warehoused workbins were loaded; for example, the target robot can be instructed to prioritize the return of a to-be-in-warehoused workbin closer to the target robot based on the distance between the target robot and the in-warehouse locations bound to the respective to-be-in-warehoused workbins; for another example, the moving route of the target robot can be determined in advance based on the workbin information of individual to-be-in-warehoused workbins and the location information of the bound in-warehouse location, and then the target robot can be instructed to sequentially return individual to-be-in-warehoused workbins along the above moving route. Of course, the above examples are only examples of instructing the target robot to return individual to-be-in-warehoused workbins according to preset rules, and are not limiting.

Since during the process of the target robot returning the to-be-in-warehoused workbins, there may still be an empty storage compartment after the target robot loads to-be-in-warehoused workbins in the in-warehouse area, and there may be an empty storage compartment after the target robot stores some of its loaded to-be-in-warehoused workbins in the bound in-warehouse locations, in order to improve the utilization rate of the target robot, a to-be-ex-warehoused workbin can be loaded in the empty storage compartment of the target robot in the process of the target robot returning the to-be-in-warehoused workbins.

Based on this, during the process of the target robot returning the to-be-in-warehoused workbins, when the target robot moves from the current position to an in-warehouse location bound to the next to-be-in-warehoused workbin, if the target robot has an empty storage compartment, and there is a to-be-ex-warehoused workbin in the shelf area, the target robot can be instructed to load the to-be-ex-warehoused workbin.

For example, if the target robot has 10 storage compartments and is loaded with 6 to-be-in-warehoused workbins in the in-warehouse area, the target robot still has 4 empty storage compartments. Therefore, during the process of the target robot returning the to-be-in-warehoused workbins, if there is a to-be-ex-warehoused workbin in the shelf area, the target robot can be instructed to load the to-be-ex-warehoused workbin.

For another example, the target robot has 10 storage compartments and is loaded with 10 to-be-in-warehoused workbins in the in-warehouse area. In the process of the target robot returning the to-be-in-warehoused workbins, after returning 3 to-be-in-warehoused workbins, the target robot has 3 empty storage compartments. In this way, if there are to-be-ex-warehoused workbins in the warehouse locations where the target robot passes through, the target robot can be instructed to load 3 to-be-ex-warehoused workbins.

Wherein, optionally, in a specific implementation, the above step S102 can include the following Step 11:
Step 11: when the target robot has an empty storage compartment, instructing the target robot to load a to-be-ex-warehoused workbin located in a target warehouse location in the empty storage compartment.

Wherein, the target warehouse location includes at least one of the following warehouse locations: a warehouse location located on a moving route of the target robot returning the to-be-in-warehoused workbins, and a warehouse location whose distance from an in-warehouse location of the to-be-in-warehoused workbin is less than a preset distance.

In this specific implementation, during a process of the target robot returning the to-be-in-warehoused workbins, when the target robot has an empty storage compartment, the target robot can load a to-be-ex-warehoused workbin located in the target warehouse location in the empty storage compartment.

Wherein, the target warehouse location includes at least one of the following warehouse locations: a warehouse location located on a moving route of the target robot returning the to-be-in-warehoused workbins, and a warehouse location whose distance from an in-warehouse location of the to-be-in-warehoused workbin is less than a preset distance.

That is to say, during a process of the target robot returning the to-be-in-warehoused workbins, it is possible to take a warehouse location located on the moving route of the target robot returning the to-be-in-warehoused workbins, and/or a warehouse location whose distance from an in-warehouse location of the to-be-in-warehoused workbin is less than a preset distance as the target warehouse location. The preset distance mentioned above can be set according to actual needs, such as 1 m, 5 m, etc., which are reasonable and not specifically limited in the embodiments of the present application.

Moreover, during a process of the target robot returning the to-be-in-warehoused workbins, when the target robot has an empty storage compartment, the target robot can load a to-be-ex-warehoused workbin located in the target warehouse location in the empty storage compartment.

Optionally, during a process of the target robot returning the to-be-in-warehoused workbins, it can detect whether the target robot has an empty storage compartment and whether there is a to-be-ex-warehoused workbin stored in a target warehouse location in the shelf area. Moreover, when the above detection results are all TRUE, that is, it is detected that the target robot has an empty storage compartment, and it is detected that there is a to-be-ex-warehoused workbin located in the target warehouse location, the target robot can be instructed to load the to-be-ex-warehoused workbin located in the target warehouse location in the empty storage compartment.

Optionally, when the execution subject of the method for adjusting a warehouse location provided by the embodiment of the present application is the target robot itself, the target robot can determine the moving route based on its current position and the location of an in-warehouse location bound to the next to-be-in-warehoused workbin. Then, when it is detected the target robot has an empty storage compartment, the target robot can send a to-be-ex-warehoused workbin obtaining request carrying the above moving route to the robot management server. In this way, the robot management server can receive the to-be-ex-warehoused workbin obtaining request and determine a to-be-ex-warehoused workbin located on the above moving route among the respective to-be-ex-warehoused workbins stored in itself, then send the warehouse location identification of the determined to-be-ex-warehoused workbin to the target robot, so that the target robot can load the aforementioned to-be-ex-warehoused workbin.

Optionally, when the execution subject of the method for adjusting a warehouse location provided by the embodiment of the present application is the robot management server, the robot management server can detect in real time whether the target robot has an empty warehouse location. Therefore, when it is detected that the target robot has an empty warehouse location, it is possible to determine whether there is a to-be-ex-warehoused workbin, among to-be-ex-warehoused workbins stored in itself, whose distance from an in-warehouse location bound to a to-be-in-warehoused workbin closest to the target robot is not greater than a preset distance. If so, the robot management server can send the warehouse location identification of this to-be-ex-warehoused workbin to the target robot, so that the target robot loads the aforementioned to-be-ex-warehoused workbin.

S103: after the target robot transfers the to-be-ex-warehoused workbin from a specified warehouse location to its own empty storage compartment, instructing the target robot to transfer a currently loaded target to-be-in-warehoused workbin to the specified warehouse location, and releasing a binding relationship between the target to-be-in-warehoused workbin and an in-warehouse location for the target to-be-in-warehoused workbin.

After the target robot transfers the to-be-ex-warehoused workbin from the specified warehouse location to its own empty storage compartment, since the to-be-ex-warehoused workbin has been moved out, the specified warehouse location for storing the to-be-ex-warehoused workbin is in an idle state.

Therefore, in order to improve the work efficiency of the robot, the currently loaded target to-be-in-warehoused workbin can be stored in the specified warehouse location nearby. In this way, since the in-warehoused task of this target to-be-in-warehoused workbin has been completed, this target robot does not need to move to the in-warehouse location for this target to-be-in-warehoused workbin, thus saving the distance that the target robot needs to move in the process of returning workbins.

Moreover, since the target to-be-in-warehoused workbin has been placed in the specified warehouse location in the shelf area for storage, there is no need to place this target to-be-in-warehoused workbin in an in-warehouse location bound to this target to-be-in-warehoused workbin. Therefore, the binding relationship between the target to-be-in-warehoused workbin and the in-warehouse location for the target to-be-in-warehoused workbin can be released. In this way, after the above binding relationship is released, the in-warehouse location originally bound to the target to-be-in-warehoused workbin can be allocated to other to-be-in-warehoused workbin.

Optionally, after the target robot transfers the to-be-ex-warehoused workbin from the specified warehouse location to its own empty storage compartment, a target to-be-in-warehoused workbin is determined from the to-be-in-warehoused workbins currently loaded by the target robot, the specified warehouse location is locked, and the target robot is instructed to transfer the currently loaded target to-be-in-warehoused workbin to the specified warehouse location. Then, the binding relationship between the target to-be-in-warehoused workbin and the in-warehouse location for the target to-be-in-warehoused workbin is released, and the in-warehouse location bound to the target to-be-in-warehoused workbin is unlocked.

Optionally, in a specific implementation, the above step S103 can include the following Step 21:
Step 21: determining a target to-be-in-warehoused workbin that matches the specified warehouse location from the to-be-in-warehoused workbins currently loaded by the target robot, and instructing the target robot to transfer the target to-be-in-warehoused workbin to the specified warehouse location.

In this specific implementation, after the target robot transfers the to-be-ex-warehoused workbin from the specified warehouse location to its own empty storage compartment, the target to-be-in-warehoused workbin that matches the specified warehouse location can be determined from the to-be-in-warehoused workbins currently loaded by the target robot, and the target robot is instructed to transfer the target to-be-in-warehoused workbin to the specified warehouse location.

Wherein, the target to-be-in-warehoused workbin that matches the specified warehouse location can be a to-be-in-warehoused workbin bound to this specified warehouse location, or can be a workbin whose workbin information matches the warehouse location information of the specified warehouse location, that is, this specified warehouse location meets a storage requirement of the to-be-in-warehoused workbin, and this to-be-in-warehoused workbin can be stored in the to-be-in-warehoused workbin in the specified warehouse location.

For example, if the specified warehouse location is a warehouse location used to store non-fragile goods, and all the to-be-in-warehoused workbins loaded by the target robot are all workbins loaded with fragile goods, it can be determined that among all the to-be-in-warehoused workbins loaded by the target robot, there is no target to-be-in-warehoused workbin that can be stored in the specified warehouse location.

For another example, the specified warehouse location is a cubic warehouse location with each side length of 50 cm. If there is one to-be-in-warehoused workbin with each side length of 40 cm in all the to-be-in-warehoused workbins loaded by the target robot, this to-be-in-warehoused workbin can be determined as the target to-be-in-warehoused workbin that can be stored in the above specified warehouse location.

Moreover, when there is a target to-be-in-warehoused workbin that matches the specified warehouse location in all the to-be-in-warehoused workbins currently loaded by the target robot, the target robot can be instructed to transfer the above target to-be-in-warehoused workbin to the specified warehouse location.

In this way, after the target robot stores the currently loaded target to-be-in-warehoused workbin that matches the specified warehouse location in the specified warehouse location, the target robot no longer needs to stores this target to-be-in-warehoused workbin in the in-warehouse location originally bound to this target to-be-in-warehoused workbin, thus saving the total distance and total time for the target robot to return workbins.

Furthermore, if there is no target to-be-in-warehoused workbin that matches the specified warehouse location in all the to-be-in-warehoused workbins currently loaded by the target robot, then the target robot can be instructed to ignore the specified warehouse location and to continue returning the to-be-in-warehoused workbins.

Illustratively, as shown in Figures 2(a) to 2(b), the robot can be instructed to load the to-be-in-warehoused workbin A into the robot's storage compartment A. Then the warehouse location A in the shelf area is allocated for the workbin A, and the binding relationship between workbin A and the warehouse location A is determined, the robot can be instructed to return the workbin A.

In the process of the robot moving towards the warehouse location A, since the robot has the empty storage compartment B, and there is a to-be-ex-warehoused workbin B in the warehouse location B that the robot passes through, the robot can be instructed to load the workbin B in the empty storage compartment B. In this way, after transferring the workbin B to the storage compartment B, the warehouse location B will be restored to an idle state. Due to the fact that the workbin A currently loaded by the robot matches the above warehouse location B, the robot can be instructed to transfer the workbin A into the warehouse location B. Since the workbin A has been transferred to the warehouse location B, there is no need to transfer the workbin A to the warehouse location A. Therefore, the binding relationship between the bin A and the warehouse location A can be released, and the warehouse location A can be restored to an available warehouse location.

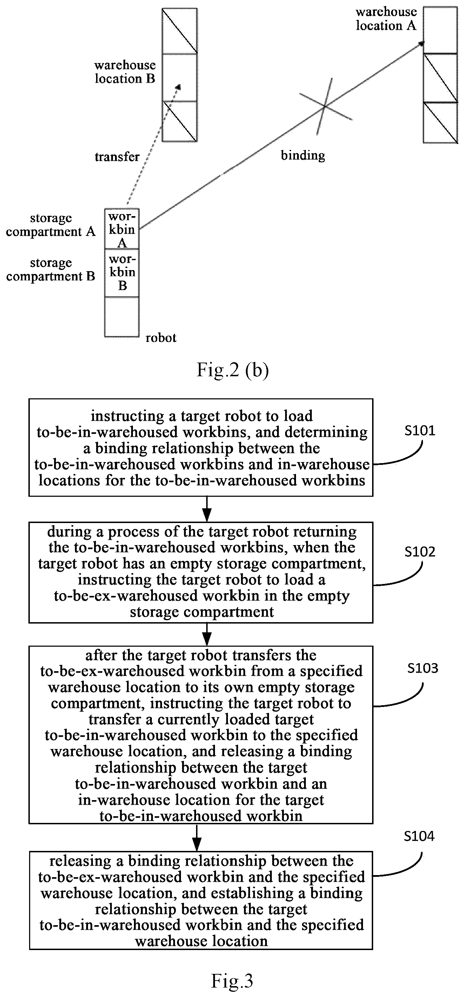

Optionally, in a specific implementation, as shown in figure 3, after the above step S103, releasing the binding relationship between the target to-be-in-warehoused workbin and an in-warehouse location for the target to-be-in-warehoused workbin, the method for adjusting a warehouse location provided by an embodiment of the present application further includes the following step S104:
S104: releasing the binding relationship between the to-be-ex-warehoused workbin and the specified warehouse location, and establishing a binding relationship between the target to-be-in-warehoused workbin and the specified warehouse location.

In this specific implementation, after releasing the binding relationship between the target to-be-in-warehoused workbin and an in-warehouse location for the target to-be-in-warehoused workbin, as the to-be-ex-warehoused workbin has been moved out of the specified warehouse location, thus the binding relationship between the to-be-ex-warehoused workbin and the specified warehouse location can be released; due to the fact that the target to-be-in-warehoused workbin has been transferred into the specified warehouse location, which is the in-warehouse location for the target to-be-in-warehoused workbin, therefore, the binding relationship between the target to-be-in-warehoused workbin and the specified warehouse location can be established. At this point, a binding relationship between the stored workbin and the specified warehouse location is always established, and a binding relationship between the target to-be-in-warehoused workbin and its own in-warehouse location can be established.

In this way, by utilizing the specified warehouse location mentioned above, a flexible adjustment of the in-warehouse location for the target to-be-in-warehoused workbin has been achieved, and the efficiency of returning workbins has been improved.

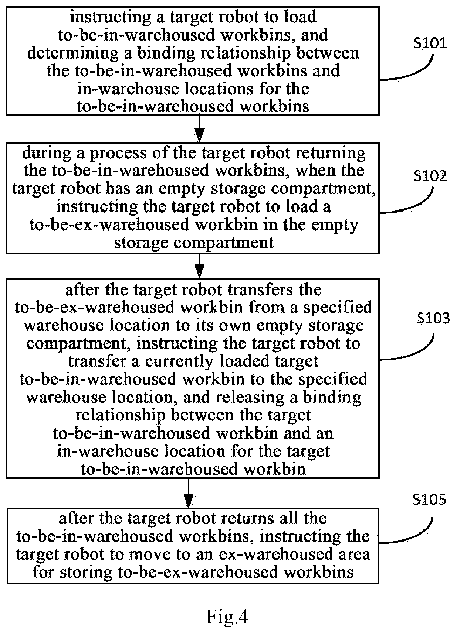

Optionally, in a specific implementation, as shown in Figure 4, the method for adjusting a warehouse location provided by an embodiment of the present application further includes the following step S105:
S105: after the target robot returns all the to-be-in-warehoused workbins, instructing the target robot to move to an ex-warehouse area for storing to-be-ex-warehoused workbins.

Due to the fact that the target robot loaded individual to-be-ex-warehoused workbins in the process of returning the to-be-in-warehoused workbins, so that after the target robot storing all the to-be-in-warehoused workbins, all the workbins currently loaded by the target robot are to-be-ex-warehoused workbins. Moreover, in order to complete the ex-warehousing of all the to-be-ex-warehoused workbins, the target robot can be instructed to move to the ex-warehouse area for storing the to-be-ex-warehoused workbins.

Wherein, the above-mentioned ex-warehouse area is different from the above-mentioned shelf area, the ex-warehouse area can be an in-warehouse area or other area that is different from the in-warehouse area.

Illustratively, as shown in Figure 2(b), if the workbin A has been returned, only the to-be-ex-warehoused workbin B is loaded in this robot, so that the robot can be instructed to move to the ex-warehouse area for storing the workbin B.

Optionally, in a specific implementation, after the above step S105, before instructing the target robot to move to the ex-warehouse area for storing the to-be-ex-warehoused workbins, a method for adjusting a warehouse location provided by the embodiment of the present application further includes the following Steps 31 to 32:
Step 31: detecting whether the target robot has an empty storage compartment; if so, performing Step 32; otherwise, performing step S107;
Step 32: instructing the target robot to load each of to-be-ex-warehoused workbins that are not ex-warehoused until there is no empty storage compartment in the target robot, and instructing the target robot to move to the ex-warehouse area for storing the to-be-ex-warehoused workbins.

In this specific implementation, after the target robot returns all the to-be-in-warehoused workbins, the target robot may still have an empty storage compartment. Based on this, in order to improve the utilization rate of the target robot, so that the target robot can move to the ex-warehouse area with a full load of the to-be-ex-warehoused workbins, each of the storage compartments of the target robot can be detected after the target robot returns all the to-be-in-warehoused workbins. Moreover, when it is detected that the target robot still has an empty storage compartment, the target robot can be instructed to continue using the empty storage compartment to load a to-be-ex-warehoused workbin in the shelf area until it is detected that the target robot does not have an empty storage compartment, then the target robot can be instructed to move to the ex-warehouse area for storing the to-be-ex-warehoused workbins. In this way, the target robot can be fully loaded and unloaded, thereby improving the utilization rate of the target robot.

If the target robot has an empty storage compartment, it can detect whether there is a to-be-ex-warehoused workbin in the shelf area. If it is detected there is a to-be-ex-warehoused workbin in the shelf area, the target robot is instructed to continue to load the to-be-ex-warehoused workbin in the shelf area until it is detected that there is no empty storage compartment in the target robot, and the target robot can be instructed to move to the ex-warehouse area for storing to-be-ex-warehoused workbins.

Optionally, when the execution subject of the method for adjusting a warehouse location provided by the embodiment of the present application is the target robot itself, when an empty storage compartment is detected, the target robot can detect a to-be-ex-warehoused workbin in the shelf area, and based on the specified number of empty storage compartments and the distance between each to-be-ex-warehoused workbin and the target robot, prioritize loading a to-be-ex-warehoused workbin closer to the target robot in order of distance from near to far, until it is detected that there is no empty storage compartment, so that the target robot can achieve full load as soon as possible.

Optionally, when the execution subject of the method for adjusting a warehouse location provided by the embodiment of the present application is the target robot itself, when an empty storage compartment is detected, the target robot can detect a to-be-ex-warehoused workbin in the shelf area, and based on the specified number of the empty storage compartments and the release time of an ex-warehoused task of each to-be-ex-warehoused workbin, prioritize loading a to-be-ex-warehoused workbin with earlier release time in order of task release time from early to late, until no empty storage compartment is detected.

Optionally, when the execution subject of the method for adjusting a warehouse location provided by the embodiment of the present application is the target robot itself, when an empty storage compartment is detected, the target robot can send an ex-warehoused task obtaining request carrying the number of empty storage compartments to the robot management server, and when receiving ex-warehoused tasks sent by the robot management server, the target robot sequentially executes each ex-warehoused task.

Optionally, when the execution subject of the method for adjusting a warehouse location provided by the embodiment of the present application is a robot management server, when it is detected the target robot has an empty storage compartment, the management server can filter a specified number of to-be-ex-warehoused workbins that are closer to the target robot in the shelf area based on the specified number of empty storage compartments, and instruct the target robot to prioritize loading the filtered to-be-ex-warehoused workbins.

Optionally, when the execution subject of the method for adjusting a warehouse location provided by the embodiment of the present application is the robot management server, when it is detected the target robot has an empty storage compartment, the robot management server can select a specified number of ex-warehoused tasks with earlier release times in the shelf area based on the specified number of empty storage compartments according to the release times of the ex-warehoused tasks, and instruct the target robot to sequentially execute each ex-warehoused task.

On the contrary, when it is detected that there is no empty storage compartment in the target robot, it can be determined that the target robot is fully loaded, thus, the target robot can be instructed to move to the ex-warehouse area for storing the to-be-ex-warehoused workbins.

It can be seen from the above that, by applying the solution provided by the embodiment of the present application, in the process of the robot with multiple storage compartments returning the to-be-in-warehoused workbins, if the robot is instructed to load a to-be-ex-warehoused workbin in its own empty storage compartment, a warehouse location in the shelf area where the to-be-ex-warehoused workbin was originally stored becomes an available warehouse location, and this available warehouse location can be used to store a to-be-in-warehoused workbin loaded by the robot. Therefore, the robot can use this warehouse location to store the to-be-in-warehoused workbin loaded by itself, without moving to the in-warehouse location bound to the to-be-in-warehoused workbin. In this way, by using the newly available warehouse location in the shelf area as a warehouse location for the to-be-in-warehoused workbin, the flexibility in warehouse location allocation is achieved, thereby saving the total distance and total time for the robot returning the to-be-in-warehoused workbins, improving the efficiency of the robot returning the to-be-in-warehoused workbins, and improving the overall processing efficiency of the warehousing system; in addition, the robot is instructed to load a to-be-ex-warehoused workbin during the return process, which further improves the overall processing efficiency of the warehousing system.

In some cases, there are warehouse locations in the shelf area that store to-be-ex-warehoused workbins. The warehouse locations storing the to-be-ex-warehoused workbins can be referred to as to-be-cleared warehouse locations. In order to improve the utilization rate of the warehouse location, the to-be-cleared warehouse locations storing the to-be-ex-warehoused workbins can be allocated to the matched to-be-in-warehoused workbins. In this way, when the target robot returns the to-be-in-warehoused workbins, for each to-be-in-warehoused workbin loaded by the target robot that has a binding relationship with a to-be-cleared warehouse location which stores a to-be-ex-warehoused workbin therein, the target robot can first transfer the to-be-ex-warehoused workbin stored in the to-be-cleared warehouse location to its own empty storage compartment, and then transfer the to-be-in-warehoused workbin to the to-be-cleared warehouse location.

Based on this, in a specific implementation, the above step S101, determining the binding relationship between the to-be-in-warehoused workbins and the in-warehouse locations for the to-be-in-warehoused workbins can include the following Step 41:
Step 41: determining empty warehouse locations that match the to-be-in-warehoused workbins as the in-warehouse locations for the to-be-in-warehoused workbins, and establishing a binding relationship between the to-be-in-warehoused workbins and the empty warehouse locations.

In this specific implementation, for each to-be-in-warehoused workbin, an empty warehouse location that matches this to-be-in-warehoused workbin can be determined from all the empty warehouse locations in the shelf area, then the empty warehouse location that matches this to-be-in-warehoused workbin can be determined as an in-warehouse location for this to-be-in-warehoused workbin, and the binding relationship between this to-be-in-warehoused workbin and the empty warehouse location can be established.

Wherein, in this specific implementation, for the to-be-in-warehoused workbin bound to the empty warehouse location, the process of returning the to-be-in-warehoused workbin includes the process of transferring the to-be-in-warehoused workbin to the empty warehouse location bound to the to-be-in-warehoused workbin. That is to say, when the target robot returns the to-be-in-warehoused workbin, it can first move to the empty warehouse location bound to the to-be-in-warehoused workbin, and transfer the in-warehouse location to the above empty warehouse location.

Optionally, in a specific implementation, the above step S101, determining the binding relationship between the to-be-in-warehoused workbins and the in-warehouse locations for the to-be-in-warehoused workbins can include the following Steps 42 to 43:
Step 42: for each to-be-in-warehoused workbin, determining whether there is a to-be-cleared warehouse location which stores a to-be-ex-warehoused workbin and matches the to-be-in-warehoused workbin; if so, performing Step 43; otherwise, performing Step 41;
Step 43: determining the to-be-cleared warehouse location as an in-warehouse location for the to-be-in-warehoused workbin, to obtain a binding relationship between the to-be-in-warehoused workbin and the to-be-cleared warehouse location.

In this specific implementation, for each to-be-in-warehoused workbin, it can first determine whether there is a to-be-cleared warehouse location in the shelf area which stores a to-be-ex-warehoused workbin and matches the to-be-in-warehoused workbin.

If there is a to-be-cleared warehouse location in the shelf area which stores a to-be-ex-warehoused workbin and matches the to-be-in-warehoused workbin, then the above-mentioned to-be-cleared warehouse location can be allocated to the to-be-in-warehoused workbin, that is, the to-be-cleared warehouse location can be determined as an in-warehouse location for the to-be-in-warehoused workbin, thereby determining the binding relationship between the to-be-in-warehoused workbin and the to-be-cleared warehouse location.

If there is no to-be-cleared warehouse location in the shelf area which stores a to-be-ex-warehoused workbin and matches the to-be-in-warehoused workbin, then an empty warehouse location that matches the to-be-in-warehoused workbin can be determined from all the empty warehouse locations in the shelf area, then the determined empty warehouse location can be allocated to the to-be-in-warehoused workbin, that is, the determined empty warehouse location can be determined as the in-warehouse location for the to-be-in-warehoused workbin, thereby determining the binding relationship between the to-be-in-warehoused workbin and the empty warehouse location.

In this specific implementation, for the to-be-in-warehoused workbin bound to the to-be-cleared warehouse location, the process of returning the to-be-in-warehoused workbin includes the process of transferring the to-be-in-warehoused workbin to the to-be-cleared warehouse location bound to the to-be-in-warehoused workbin. That is to say, when the target robot returns the to-be-in-warehoused workbin, and when there is an empty storage compartment in the target robot, the target robot can first move to the to-be-cleared warehouse location bound to the to-be-in-warehoused workbin, and transfer the to-be-ex-warehoused workbin stored in the to-be-cleared warehouse location to its own empty storage compartment, and then transfer the in-warehouse location to the above to-be-cleared warehouse location.

It should be emphasized that, in this implementation, in the process of the target robot returning the to-be-in-warehoused workbin, when the target robot has an empty storage compartment, a specified warehouse location is different from the to-be-cleared warehouse location bound to the to-be-in-warehoused workbin loaded by the target robot, wherein the target robot is instructed to transfer a to-be-ex-warehoused workbin from the specified warehouse location to the empty storage compartment. That is to say, if the in-warehouse location bound to the to-be-in-warehoused workbin loaded by the target robot is the to-be-cleared warehouse location where the to-be-ex-warehoused workbin is stored, in the process of the target robot moving towards the to-be-cleared warehouse location, if the target robot has an empty storage compartment and transfers the to-be-ex-warehoused workbin from the specified warehouse location to its own empty storage compartment, the to-be-in-warehoused workbin can be transferred to the specified warehouse location, there is no need to be transferred to the to-be-cleared warehouse location bound to the to-be-in-warehoused workbin, thereby saving the path for returning workbins and improving the efficiency of returning the to-be-in-warehoused workbin.

Furthermore, in order to reduce the frequency of each target robot traveling back and forth to different spaces and improve the efficiency of each target robot returning to-be-in-warehoused workbins, it is usually hoped that each target robot can load a large number of to-be-in-warehoused workbins, or even be full loaded, when leaving the in-warehouse area for storing the respective to-be-in-warehoused workbins.

Based on this, it can be preset a preset workbin returning condition and instruct the target robot to leave the in-warehouse area for storing the respective to-be-in-warehoused workbins and return each to-be-in-warehoused workbin into each in-warehouse location when the above preset workbin returning condition is met.

Wherein, the preset workbin returning condition can be the number of the to-be-in-warehoused workbins loaded by the target robot reaches a preset workbin loading capacity, or the target robot is loaded with to-be-in-warehoused workbins and there is no to-be-in-warehoused workbin to be loaded in an in-warehouse area for storing the respective to-be-in-warehoused workbins.

Moreover, since different robots have different specifications, types, and performance parameters, the number of the storage compartments possessed by different robots can be different, moreover, the preset workbin loading capacity of different robots can also be different.

Optionally, for each robot, the preset workbin loading capacity of the robot can be set according to actual needs. For example, when each robot is expected to leave the in-warehouse area fully loaded, the preset workbin loading capacity can be equal to the total number of the storage compartments contained in the robot.

Optionally, when the weight of all the to-be-in-warehoused workbins is large, if the robot is fully loaded, its loaded weight may exceed the preset workbin loading capacity of the robot, which causes damage to the robot. Therefore, the above preset workbin loading capacity can be set based on workbin information of the to-be-in-warehoused workbins, which can be a part of the total number of the storage compartments contained in the robot, such as half, two-thirds, etc.; it can also be fixed data, such as 5, 10, etc., all of which are reasonable and not specifically limited in the embodiment of the present application.

In this way, when instructing the target robot to load the to-be-in-warehoused workbins in the in-warehouse area, it can be determined whether the target robot meets the preset workbin returning condition mentioned above.

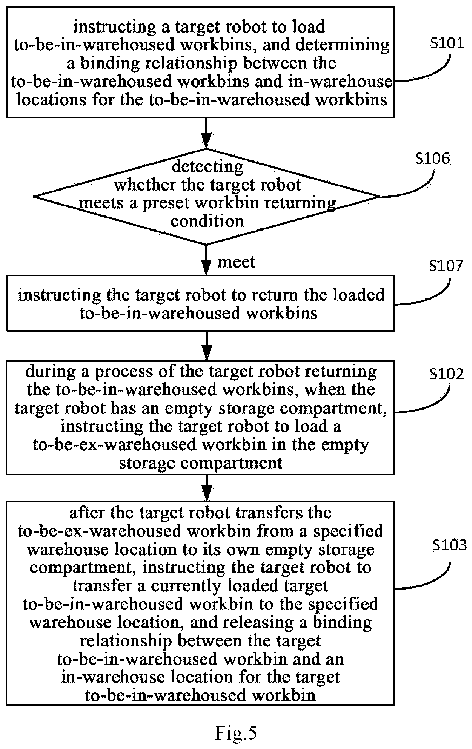

Based on this, optionally, in a specific implementation, as shown in Figure 5, a method for adjusting a warehouse location provided by an embodiment of the present application further includes the following steps S106-S107:
S106: detecting whether the target robot meets a preset workbin returning condition; if it meets the preset workbin returning condition, performing step S107;
   wherein, the preset workbin returning condition comprises: the number of the to-be-in-warehoused workbins loaded by the target robot reaches a preset workbin loading capacity, or the target robot is loaded with to-be-in-warehoused workbins and there is no to-be-in-warehoused workbin to be loaded in an in-warehouse area for storing the respective to-be-in-warehoused workbins;
S107: instructing the target robot to return the loaded to-be-in-warehoused workbins.

In this specific implementation, when instructing the target robot to load the to-be-in-warehoused workbins in the in-warehouse area for storing the respective to-be-in-warehoused workbins, or before instructing the target robot to return the to-be-in-warehoused workbins loaded by itself, it can be detected whether the target robot meets the preset workbin returning condition.

Wherein, the preset workbin returning condition includes that the number of the to-be-in-warehoused workbins loaded by the target robot reaches the preset workbin loading capacity, or the target robot is loaded with to-be-in-warehoused workbins and there is no to-be-in-warehoused workbin to be loaded in an in-warehouse area for storing the respective to-be-in-warehoused workbins.

When the preset workbin returning condition is that the number of the to-be-in-warehoused workbins loaded by the target robot reaches the preset workbin loading capacity, if the target robot meets the preset workbin returning condition, the number of the to-be-in-warehoused workbins loaded by the target robot reaches the preset workbin loading capacity. Therefore, the target robot can be instructed to return the loaded to-be-in-warehoused workbins.

When the preset workbin returning condition is that the target robot is loaded with to-be-in-warehoused workbins and there is no to-be-in-warehoused workbin to be loaded in an in-warehouse area for storing the respective to-be-in-warehoused workbins, if the target robot meets the preset workbin returning condition, then the target robot is loaded with to-be-in-warehoused workbins and there is no to-be-in-warehoused workbin to be loaded in an in-warehouse area, that is, some of the storage compartments of the target robot are loaded with to-be-in-warehoused workbins, and there is currently no other to-be-in-warehoused workbin in the in-warehouse area. Therefore, in order to improve the work efficiency of the target robot, it can be instructed to return the loaded to-be-in-warehoused workbins.

When the preset workbin returning condition is that the number of the to-be-in-warehoused workbins loaded by the target robot reaches the preset workbin loading capacity, if the target robot does not meet the preset workbin returning condition, the number of the to-be-in-warehoused workbins loaded by the target robot does not reach the preset workbin loading capacity. Therefore, the target robot can be instructed to continue loading other to-be-in-warehoused workbins in the in-warehouse area until it is detected that the target robot meets the preset workbin returning condition mentioned above, then the target robot can be instructed to return the loaded to-be-in-warehoused workbins.

When the preset workbin returning condition is that the target robot loads to-be-in-warehoused workbins and there is no to-be-in-warehoused workbin to be loaded in the in-warehouse area, if the target robot does not meet the preset workbin returning condition, then the target robot is not loaded with a workbin or the target robot is loaded with workbins and there is other to-be-in-warehoused workbins in the in-warehouse area. Therefore, the target robot can be instructed to wait for loading other to-be-in-warehoused workbins in the in-warehouse area or continue loading other to-be-in-warehoused workbins in the in-warehouse area until it is detected that the target robot meets the preset workbin returning conditions mentioned above, then the target robot can be instructed to return the loaded to-be-in-warehoused workbins.

Based on the same invention concept, corresponding to the method for adjusting a warehouse location shown in Figure 1 provided by the above embodiment of the present application, an embodiment of the present application further provides an apparatus for adjusting a warehouse location.

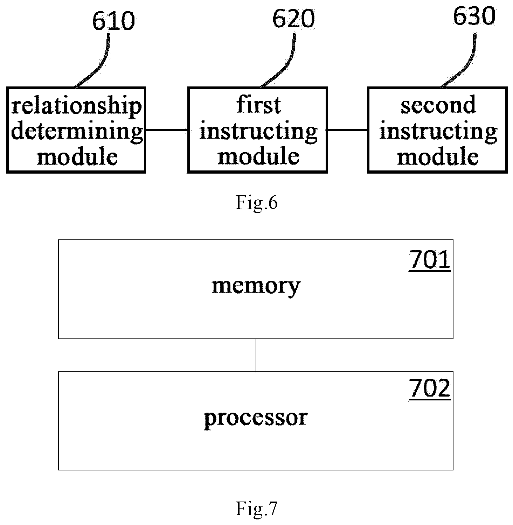

Figure 6 is a structural schematic diagram of an apparatus for adjusting a warehouse location provided by an embodiment of the present application, as shown in Figure 6, the apparatus can include the following module:
a relationship determining module 610, configured for instructing a target robot to load to-be-in-warehoused workbins, and determining a binding relationship between the to-be-in-warehoused workbins and in-warehouse locations of the to-be-in-warehoused workbins; wherein the target robot is a robot with multiple storage compartments;
a first instructing module 620, configured for, during a process of the target robot returning the to-be-in-warehoused workbins, when the target robot has an empty storage compartment, instructing the target robot to load a to-be-ex-warehoused workbin in the empty storage compartment;
a second instructing module 630, configured for instructing, after the target robot transfers the to-be-ex-warehoused workbin from a specified warehouse location to its own empty storage compartment, the target robot to transfer a currently loaded target to-be-in-warehoused workbin to the specified warehouse location, and releasing a binding relationship between the target to-be-in-warehoused workbin and an in-warehouse location for the target to-be-in-warehoused workbin.

As seen above, by applying the solution provided by the embodiment of the present application, in the process of the robot with multiple storage compartments returning to-be-in-warehoused workbins, if the robot is instructed to load a to-be-ex-warehoused workbin in its own empty storage compartment, a warehouse location in the shelf area where the to-be-ex-warehoused workbin was originally stored becomes an available warehouse location, and this available warehouse location can be used to store the to-be-in-warehoused workbin loaded by the robot. Therefore, the robot can use this warehouse location to store a to-be-in-warehoused workbin loaded by itself, without moving to the in-warehouse location bound to this to-be-in-warehoused workbin. In this way, by using the newly available warehouse location in the shelf area as a warehouse location for the to-be-in-warehoused workbin, the flexibility in warehouse location allocation is achieved, thereby saving the total distance and total time for the robot returning the to-be-in-warehoused workbins, improving the efficiency of the robot returning the to-be-in-warehoused workbins, and improving the overall processing efficiency of the warehousing system; in addition, the robot is instructed to load to-be-ex-warehoused workbins during the return process, which further improves the overall processing efficiency of the warehousing system.

Optionally, in one specific implementation, the second instructing module 630 is specifically configured for:
determining a target to-be-in-warehoused workbin that matches the specified warehouse location from the to-be-in-warehoused workbins currently loaded by the target robot, and instructing the target robot to transfer the target to-be-in-warehoused workbin to the specified warehouse location.

Optionally, in one specific implementation, the apparatus further includes:
a first detecting module, configured for detecting whether the target robot meets a preset workbin returning condition; wherein, the preset workbin returning condition comprises: the number of to-be-in-warehoused workbins loaded by the target robot reaches a preset workbin loading capacity, or the target robot is loaded with to-be-in-warehoused workbins and there is no to-be-in-warehoused workbin to be loaded in an in-warehouse area for storing the respective to-be-in-warehoused workbins; if it meets the preset workbin returning condition, triggering a third instructing module;
the third instructing module, configured for instructing the target robot to return the loaded to-be-in-warehoused workbins.

Optionally, in one specific implementation, the second relationship determining module 610 is specifically configured for:
determining empty warehouse locations that match the to-be-in-warehoused workbins as the in-warehouse locations for the to-be-in-warehoused workbins, and establishing a binding relationship between the to-be-in-warehoused workbins and the empty warehouse locations;
   or,
for each to-be-in-warehoused workbin, determining whether there is a to-be-cleared warehouse location which stores a to-be-ex-warehoused workbin and matches the to-be-in-warehoused workbin; if it is determined that there is a to-be-cleared warehouse location which stores a to-be-ex-warehoused workbin and matches the to-be-in-warehoused workbin, determining the to-be-cleared warehouse location as an in-warehouse location for the to-be-in-warehoused workbin, to obtain a binding relationship between the to-be-in-warehoused workbin and the to-be-cleared warehouse location; otherwise, determining an empty warehouse location that matches the to-be-in-warehoused workbin as an in-warehouse location for the to-be-in-warehoused workbin, to obtain a binding relationship between the to-be-in-warehoused workbin and the empty warehouse location.

Optionally, in one specific implementation, the first instructing module 620 is specifically configured for:
when the target robot has an empty storage compartment, instructing the target robot to load a to-be-ex-warehoused workbin located in a target warehouse location in the empty storage compartment;
wherein, the target warehouse location comprises at least one of the following warehouse locations: a warehouse location located on a moving route of the target robot returning the to-be-in-warehoused workbins, and a warehouse location whose distance from an in-warehouse location for the to-be-in-warehoused workbin is less than a preset distance.

Optionally, in one specific implementation, the apparatus further includes:
a relationship establishing module, configured for, after releasing the binding relationship between the target to-be-in-warehoused workbin and an in-warehouse location for the target to-be-in-warehoused workbin, releasing a binding relationship between the to-be-ex-warehoused workbin and the specified warehouse location, and establishing a binding relationship between the target to-be-in-warehoused workbin and the specified warehouse location.

Optionally, in one specific implementation, the apparatus further includes:
a fourth instructing module, configured for instructing the target robot to move to an ex-warehouse area for storing to-be-ex-warehoused workbins after the target robot returns all the to-be-in-warehoused workbins.

Optionally, in one specific implementation, the apparatus further includes:
a second detecting module, configured for detecting whether the target robot has an empty storage compartment before instructing the target robot to move to the ex-warehouse area for storing the to-be-ex-warehoused workbins; if it is detected that the target robot has an empty storage compartment, triggering a fifth instructing module; otherwise, triggering the fourth instructing module;
the fifth instructing module, configured for instructing the target robot to load each of to-be-ex-warehoused workbins that are not ex-warehoused until there is no empty storage compartment in the target robot, and instructing the target robot to move to the ex-warehouse area for storing the to-be-ex-warehoused workbins.

An embodiment of the present application further provides an electronic device, as shown in Figure 7, which includes:
a memory 701, configured for storing a computer program;
a processor 702, configured for, when executing the program stored on the memory 701, implementing any step of the method for adjusting a warehouse location provided by the embodiments of the present application as described above.

Moreover, the above-mentioned electronic device may also include a communication bus and/or a communication interface, wherein the processor 702, the communication interface, and the memory 701 communicate with each other through the communication bus.

The communication bus mentioned in the above electronic device can be a Peripheral Component Interconnect (PCI) standard bus or an Extended Industry Standard Architecture (EISA) bus, etc. The communication bus can be divided into an address bus, a data bus, a control bus, etc. For ease of representation, only one thick line is used in the figure, but it does not mean that there is only one bus or one type of bus.

The communication interface is used for the communication between the above electronic device and other device.

The memory may include a Random Access Memory (RAM), it can also include a Non-Volatile Memory (NVM), such as at least one disk memory. Optionally, the memory can also be at least one storage device located far away from the aforementioned processor.

The above processor can be a general-purpose processor, including a Central Processing Unit (CPU), a Network Processor (NP), etc.; it can also be a Digital Signal Processor (DSP), an Application Specific Integrated Circuit (ASIC), a Field-Programmable Gate Array (FPGA) or other programmable logic devices, discrete gates or transistor logic devices, or discrete hardware components.

In yet another embodiment of the present application, a computer-readable storage medium is further provided, which stores a computer program therein, which implements any step of the method for adjusting a warehouse location described above are when executed by a processor.

In yet another example provided by the present disclosure, a computer program product containing instructions is further provided, which, when running on a computer, causes the computer to carry out any one of the method for adjusting a warehouse location described in the above embodiments.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available medium. The usable media may be magnetic media (such as a floppy disk, a hard disk, a magnetic tape), optical media (such as DVD), and the like.

It should be noted that in this article, relational terms such as first and second are only to distinguish one entity or operation from another, and do not necessarily require or imply any actual relationship or order between these entities or operations. Moreover, the terms "include", "contain", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "including one..." do not exclude the existence of other identical elements in the process, method, item, or device that includes the elements.

The various embodiments in this specification are described in a relevant manner, and the same and similar parts between the various embodiments can be referred to each other, and each embodiment focuses on the differences from other embodiments. In particular, for the embodiments of the apparatus, the embodiments of the electronic device, the embodiments of the computer-readable storage media and the embodiments of the computer program product, since the description is basically similar to the embodiments of methods, it is relatively simple, and the relevant points can be referred to the partial description of the embodiment of the method.

## Claims

1. A method for adjusting a warehouse location, comprising:
instructing a target robot to load to-be-in-warehoused workbins, and determining a binding relationship between the to-be-in-warehoused workbins and in-warehouse locations for the to-be-in-warehoused workbins; wherein the target robot is a robot with multiple storage compartments, and the to-be-in-warehoused workbins are bins to be returned to warehouse locations in a shelf area;
during a process of the target robot returning the to-be-in-warehoused workbins, when the target robot has an empty storage compartment, instructing the target robot to load a to-be-ex-warehoused workbin in the empty storage compartment, wherein the to-be-ex-warehoused workbin is a workbin stored in a warehouse location in the shelf area and waiting to be transported to an operating table;
after the target robot transfers the to-be-ex-warehoused workbin from a specified warehouse location to its own empty storage compartment, instructing the target robot to transfer a currently loaded target to-be-in-warehoused workbin to the specified warehouse location, and releasing a binding relationship between the target to-be-in-warehoused workbin and an in-warehouse location for the target to-be-in-warehoused workbin.

2. The method according to claim 1, wherein instructing the target robot to transfer the currently loaded target to-be-in-warehoused workbin to the specified warehouse location comprises:
determining a target to-be-in-warehoused workbin that matches the specified warehouse location from the to-be-in-warehoused workbins currently loaded by the target robot, and instructing the target robot to transfer the target to-be-in-warehoused workbin to the specified warehouse location.

3. The method according to claim 1, wherein the method further comprises:
detecting whether the target robot meets a preset workbin returning condition; wherein, the preset workbin returning condition comprises: the number of to-be-in-warehoused workbins loaded by the target robot reaches a preset workbin loading capacity, or the target robot is loaded with to-be-in-warehoused workbins and there is no to-be-in-warehoused workbin to be loaded in an in-warehouse area for storing the respective to-be-in-warehoused workbins;
if it meets the preset workbin returning condition, instructing the target robot to return the loaded to-be-in-warehoused workbins.

4. The method according to claim 1, wherein determining a binding relationship between the to-be-in-warehoused workbins and in-warehouse locations for the to-be-in-warehoused workbins comprises:
determining empty warehouse locations that match the to-be-in-warehoused workbins as the in-warehouse locations for the to-be-in-warehoused workbins, and establishing a binding relationship between the to-be-in-warehoused workbins and the empty warehouse locations;
or,
for each to-be-in-warehoused workbin, determining whether there is a to-be-cleared warehouse location which stores a to-be-ex-warehoused workbin and matches the to-be-in-warehoused workbin; if it is determined that there is a to-be-cleared warehouse location which stores a to-be-ex-warehoused workbin and matches the to-be-in-warehoused workbin, determining the to-be-cleared warehouse location as an in-warehouse location for the to-be-in-warehoused workbin, to obtain a binding relationship between the to-be-in-warehoused workbin and the to-be-cleared warehouse location; otherwise, determining an empty warehouse location that matches the to-be-in-warehoused workbin as an in-warehouse location for the to-be-in-warehoused workbin, to obtain a binding relationship between the to-be-in-warehoused workbin and the empty warehouse location.

5. The method according to claim 4, wherein when the target robot has an empty storage compartment, instructing the target robot to load a to-be-ex-warehoused workbin in the empty storage compartment comprises:
when the target robot has an empty storage compartment, instructing the target robot to load a to-be-ex-warehoused workbin located in a target warehouse location in the empty storage compartment;
wherein, the target warehouse location comprises at least one of the following warehouse locations: a warehouse location located on a moving route of the target robot returning the to-be-in-warehoused workbins, and a warehouse location whose distance from an in-warehouse location for the to-be-in-warehoused workbin is less than a preset distance.

6. The method according to any one of claims 1-5, wherein after releasing the binding relationship between the target to-be-in-warehoused workbin and an in-warehouse location for the target to-be-in-warehoused workbin, the method further comprises:
releasing a binding relationship between the to-be-ex-warehoused workbin and the specified warehouse location, and establishing a binding relationship between the target to-be-in-warehoused workbin and the specified warehouse location.

7. The method according to any one of claims 1-5, wherein the method further comprises:
after the target robot returns all the to-be-in-warehoused workbins, instructing the target robot to move to an ex-warehouse area for storing to-be-ex-warehoused workbins.

8. The method according to claim 7, wherein before instructing the target robot to move to the ex-warehouse area for storing the to-be-ex-warehoused workbins, the method further comprises:
detecting whether the target robot has an empty storage compartment;
if it is detected that the target robot has an empty storage compartment, instructing the target robot to load each of to-be-ex-warehoused workbins that are not ex-warehoused until there is no empty storage compartment in the target robot, and instructing the target robot to move to the ex-warehouse area for storing the to-be-ex-warehoused workbins;
otherwise, instructing the target robot to move to the ex-warehouse area for storing the to-be-ex-warehoused workbins.

9. An electronic device, comprising:
a memory, configured for storing a computer program;
a processor, configured for implementing the method according to any one of claims 1 to 8 when executing the program stored on the memory.

10. A computer-readable storage medium storing a computer program therein, which when executed by a processor, causes the processor to implement the method according to any one of claims 1 to 8.

## Patentansprüche

1. Verfahren zum Anpassen eines Lagerorts, umfassend:
Anweisen eines Zielroboters, zu lagernde Arbeitsbehälter zu beladen, und Ermitteln einer Bindungsbeziehung zwischen den zu lagernden Arbeitsbehältern und Lagerorten für die zu lagernden Arbeitsbehälter; wobei der Zielroboter ein Roboter mit mehreren Aufbewahrungsfächern ist, und die zu lagernden Arbeitsbehälter Behälter sind, die an Lagerorte in einem Regalbereich zurückgebracht werden sollen;
während eines Vorgangs, bei dem der Zielroboter die zu lagernden Arbeitsbehälter zurückbringt, wenn der Zielroboter über ein leeres Aufbewahrungsfach verfügt, Anweisen des Zielroboters, einen aus dem Lager zu entnehmenden Arbeitsbehälter in das leere Aufbewahrungsfach zu beladen, wobei der aus dem Lager zu entnehmende Arbeitsbehälter ein Arbeitsbehälter ist, der an einem Lagerort im Regalbereich gelagert wird und darauf wartet, zu einem Arbeitstisch transportiert zu werden;
nachdem der Zielroboter den aus dem Lager zu entnehmenden Arbeitsbehälter von einem bestimmten Lagerort in sein eigenes leeres Aufbewahrungsfach transferiert hat, Anweisen des Zielroboters, einen derzeit geladenen, zu lagernden Ziel-Arbeitsbehälter an den bestimmten Lagerort zu transferieren, und Aufheben einer Bindungsbeziehung zwischen dem zu lagernden Ziel-Arbeitsbehälter, und einem Lagerort für den zu lagernden Ziel-Arbeitsbehälter.

2. Verfahren nach Anspruch 1, wobei das Anweisen des Zielroboters, den aktuell geladenen, zu lagernden Ziel-Arbeitsbehälter an den bestimmten Lagerort zu transferieren, Folgendes umfasst:
Ermitteln eines Ziel-Arbeitsbehälters aus den derzeit vom Zielroboter geladenen zu lagernden Arbeitsbehältern, der mit dem bestimmten Lagerort übereinstimmt, und Anweisen des Zielroboters, den Ziel-Arbeitsbehälter an den bestimmten Lagerort zu transferieren.

3. Verfahren nach Anspruch 1, wobei das Verfahren ferner umfasst:
Erfassen, ob der Zielroboter eine voreingestellte Bedingung zum Zurückbringen von Arbeitsbehältern erfüllt; wobei die voreingestellte Bedingung zum Zurückbringen von Arbeitsbehältern umfasst: die Anzahl der vom Zielroboter geladenen, zu lagernden Arbeitsbehälter erreicht eine voreingestellte Arbeitsbehälter-Ladekapazität, oder der Zielroboter ist mit zu lagernden Arbeitsbehältern geladen und es gibt keinen zu lagernden Arbeitsbehälter, der in einem Lagerbereich zum Lagern der jeweiligen zu lagernden Arbeitsbehälter zu laden ist;
wenn die voreingestellte Bedingung zum Zurückbringen von Arbeitsbehältern erfüllt ist, Anweisen des Zielroboters, die geladenen zu lagernden Arbeitsbehälter zurückzubringen.

4. Verfahren nach Anspruch 1, wobei das Ermitteln einer Bindungsbeziehung zwischen den zu lagernden Arbeitsbehältern und Lagerorten für die zu lagernden Arbeitsbehälter umfasst:
Ermitteln von leeren Lagerorten, die zu den zu lagernden Arbeitsbehältern passen, als Lagerorte für die zu lagernden Arbeitsbehälter und Herstellen einer Bindungsbeziehung zwischen den zu lagernden Arbeitsbehältern und den leeren Lagerorten;
oder
Ermitteln für jeden zu lagernden Arbeitsbehälter, ob es einen zu räumenden Lagerort gibt, der einen aus dem Lager zu entnehmenden Arbeitsbehälter lagert und mit dem zu lagernden Arbeitsbehälter übereinstimmt; wenn ermittelt wird, dass es einen zu räumenden Lagerort gibt, der einen aus dem Lager zu entnehmenden Arbeitsbehälter lagert und mit dem zu lagernden Arbeitsbehälter übereinstimmt, Ermitteln des zu räumenden Lagerorts als Lagerort für den zu lagernden Arbeitsbehälter, um eine Bindungsbeziehung zwischen dem zu lagernden Arbeitsbehälter und dem zu räumenden Lagerort herzustellen; andernfalls, Ermitteln eines leeren Lagerorts, der mit dem zu lagernden Arbeitsbehälter übereinstimmt, als Lagerort für den zu lagernden Arbeitsbehälter, um eine Bindungsbeziehung zwischen dem zu lagernden Arbeitsbehälter und dem leeren Lagerort herzustellen.

5. Verfahren nach Anspruch 4, wobei, wenn der Zielroboter über ein leeres Aufbewahrungsfach verfügt, das Anweisen des Zielroboters, einen aus dem Lager zu entnehmenden Arbeitsbehälter in das leere Aufbewahrungsfach zu beladen, Folgendes umfasst:
wenn der Zielroboter über ein leeres Aufbewahrungsfach verfügt, Anweisen des Zielroboters, einen aus dem Lager zu entnehmenden Arbeitsbehälter, der sich an einem Ziel-Lagerort befindet, in das leere Aufbewahrungsfach zu beladen;
wobei der Ziel-Lagerort mindestens einen der folgenden Lagerorte umfasst: einen Lagerort, der sich auf einer Bewegungsroute des Zielroboters befindet, der die zu lagernden Arbeitsbehälter zurückbringt, und einen Lagerort, dessen Entfernung von einem Lagerort für den zu lagernden Arbeitsbehälter geringer ist als eine voreingestellte Entfernung.

6. Verfahren nach einem der Ansprüche 1 bis 5, wobei nach dem Aufheben der Bindungsbeziehung zwischen dem zu lagernden Ziel-Arbeitsbehälter und einem Lagerort für den zu lagernden Ziel-Arbeitsbehälter das Verfahren ferner umfasst:
Aufheben einer Bindungsbeziehung zwischen dem aus dem Lager zu entnehmenden Arbeitsbehälter und dem bestimmten Lagerort, und Herstellen einer Bindungsbeziehung zwischen dem zu lagernden Ziel-Arbeitsbehälter und dem bestimmten Lagerort.

7. Verfahren nach einem der Ansprüche 1 bis 5, wobei das Verfahren ferner umfasst:
nachdem der Zielroboter alle zu lagernden Arbeitsbehälter zurückgebracht hat, Anweisen des Zielroboters, sich zu einem Auslagerungsbereich zu bewegen, um die aus dem Lager zu entnehmenden Arbeitsbehälter zu lagern.

8. Verfahren nach Anspruch 7, wobei das Verfahren vor dem Anweisen des Zielroboters, sich zum Auslagerungsbereich zu bewegen, um die aus dem Lager zu entnehmenden Arbeitsbehälter zu lagern, ferner umfasst:
Erkennen, ob der Zielroboter über ein leeres Aufbewahrungsfach verfügt;
wenn festgestellt wird, dass der Zielroboter über ein leeres Aufbewahrungsfach verfügt, Anweisen des Zielroboters, jeden der aus dem Lager zu entnehmenden Arbeitsbehälter, der noch nicht aus dem Lager entnommen wurde, zu beladen, bis kein leeres Aufbewahrungsfach mehr im Zielroboter vorhanden ist, und Anweisen des Zielroboters, sich zum Auslagerungsbereich zu bewegen, um die aus dem Lager zu entnehmenden Arbeitsbehälter zu lagern;
Andernfalls, Anweisen des Zielroboters, sich zum Auslagerungsbereich zu bewegen, um die aus dem Lager zu entnehmenden Arbeitsbehälter zu lagern.

9. Elektronisches Gerät, umfassend:
einen Speicher, der zum Speichern eines Computerprogramms konfiguriert ist;
einen Prozessor, der so konfiguriert ist, dass er das Verfahren gemäß einem der Ansprüche 1 bis 8 ausführt, wenn er das im Speicher gespeicherte Programm ausführt.

10. Computerlesbares Speichermedium, das ein Computerprogramm speichert, das bei Ausführung durch einen Prozessor den Prozessor veranlasst, das Verfahren gemäß einem der Ansprüche 1 bis 8 auszuführen.

## Revendications

1. Procédé pour régler un emplacement de stockage, comprenant :
ordonner à un robot cible de charger des conteneurs de travail à transporter vers un entrepôt, et déterminer une relation de liaison entre les conteneurs de travail à transporter vers l'entrepôt et des emplacements disponibles dans l'entrepôt pour les conteneurs de travail à transporter vers l'entrepôt ; le robot cible étant un robot comportant de nombreux compartiments de stockage, et les conteneurs de travail à transporter vers l'entrepôt étant des conteneurs qui doivent être ramenés vers des emplacements de stockage dans une zone de rayonnage ;
pendant une opération au cours de laquelle le robot cible ramène les conteneurs de travail à transporter vers l'entrepôt, lorsque le robot cible a un compartiment de stockage vide, ordonner au robot cible de charger un conteneur de travail à retirer de l'entrepôt dans le compartiment de stockage vide, le conteneur de travail à retirer de l'entrepôt étant un conteneur de travail qui est stocké dans un emplacement de stockage dans la zone de rayonnage et qui attend d'être transporté vers une table de travail ;
après que le robot cible a transféré le conteneur de travail à retirer de l'entrepôt depuis un emplacement de stockage spécifique vers son propre compartiment de stockage vide, ordonner au robot cible de transférer un conteneur de travail cible actuellement chargé et à transporter vers l'entrepôt vers l'emplacement de stockage spécifique, et rompre la relation de liaison entre le conteneur de travail cible à transporter vers l'entrepôt et un emplacement disponible dans l'entrepôt pour le conteneur de travail cible à transporter vers l'entrepôt.

2. Le procédé selon la revendication 1, sachant que le fait d'ordonner au robot cible de transférer le conteneur de travail cible actuellement chargé et à transporter vers l'entrepôt vers l'emplacement de stockage spécifique comprend :
la détermination d'un conteneur de travail cible à transporter vers l'entrepôt correspondant à l'emplacement de stockage spécifique parmi les conteneurs de travail à transporter vers l'entrepôt que le robot cible a actuellement chargés, et ordonner au robot cible de transférer le conteneur de travail cible à transporter vers l'entrepôt vers l'emplacement de stockage spécifique.

3. Le procédé selon la revendication 1, sachant que le procédé comprend en outre :
déterminer si le robot cible remplit une condition de retour de conteneur de travail prédéfinie ; la condition de retour de conteneur de travail prédéfinie comprenant : le nombre de conteneurs de travail à transporter vers l'entrepôt que le robot cible a chargés ayant atteint une capacité de chargement de conteneurs de travail prédéfinie, ou le robot cible est chargé de conteneurs de travail à transporter vers l'entrepôt et il n'y a pas de conteneur de travail à transporter vers l'entrepôt devant être chargé dans une zone disponible dans l'entrepôt pour stocker les conteneurs de travail respectifs à transporter vers l'entrepôt ;
lorsqu'il remplit la condition de retour de conteneur de travail prédéfinie, ordonner au robot cible de ramener les conteneurs de travail chargés à transporter vers l'entrepôt.

4. Le procédé selon la revendication 1, sachant que la détermination d'une relation de liaison entre les conteneurs de travail à transporter vers l'entrepôt et des emplacements disponibles dans l'entrepôt pour les conteneurs de travail à transporter vers l'entrepôt comprend :
déterminer des emplacements de stockage vides qui correspondent aux conteneurs de travail à transporter vers l'entrepôt comme étant les emplacements disponibles dans l'entrepôt pour les conteneurs de travail à transporter vers l'entrepôt, et établir une relation de liaison entre les conteneurs de travail à transporter vers l'entrepôt et les emplacements de stockage vides ;
ou
pour chaque conteneur de travail à transporter vers l'entrepôt, déterminer s'il existe un emplacement de stockage à vider dans lequel est stocké un conteneur de travail à retirer de l'entrepôt et qui correspond au conteneur de travail à transporter vers l'entrepôt ; lorsqu'il est déterminé qu'il existe un emplacement de stockage à vider dans lequel est stocké un conteneur de travail à retirer de l'entrepôt et qui correspond au conteneur de travail à transporter vers l'entrepôt, déterminer l'emplacement de stockage à vider comme étant un emplacement disponible dans l'entrepôt pour le conteneur de travail à transporter vers l'entrepôt, afin d'obtenir une relation de liaison entre le conteneur de travail à transporter vers l'entrepôt et l'emplacement de stockage à vider ; sinon, déterminer un emplacement de stockage vide qui correspond au conteneur de travail à transporter vers l'entrepôt comme étant un emplacement disponible dans l'entrepôt pour le conteneur de travail à transporter vers l'entrepôt afin d'obtenir une relation de liaison entre le conteneur de travail à transporter vers l'entrepôt et l'emplacement de stockage vide.

5. Le procédé selon la revendication 4, sachant que, si le robot cible a un compartiment de stockage vide, le fait d'ordonner au robot cible de charger un conteneur de travail à retirer de l'entrepôt dans le compartiment de stockage vide comprend :
lorsque le robot cible a un compartiment de stockage vide, ordonner au robot cible de charger un conteneur de travail à retirer de l'entrepôt, qui se trouve dans un emplacement de stockage cible, dans le compartiment de stockage vide ;
l'emplacement de stockage cible comprenant au moins l'un des emplacements de stockage suivants : un emplacement de stockage situé sur un itinéraire de déplacement du robot cible qui ramène les conteneurs de travail à transporter vers l'entrepôt, et un emplacement de stockage dont la distance par rapport à un emplacement existant dans l'entrepôt pour le conteneur de travail à transporter vers l'entrepôt est inférieure à une distance prédéterminée.

6. Le procédé selon l'une des revendications 1 à 5, sachant que, après avoir rompu la relation de liaison entre le conteneur de travail cible à transporter vers l'entrepôt et un emplacement existant dans l'entrepôt pour le conteneur de travail cible à transporter vers l'entrepôt, le procédé comprend en outre :
le fait de rompre la relation de liaison entre le conteneur de travail à retirer de l'entrepôt et l'emplacement de stockage spécifique, et l'établissement d'une relation de liaison entre le conteneur de travail cible à transporter vers l'entrepôt et ledit emplacement de stockage spécifique.

7. Le procédé selon l'une des revendications 1 à 5, le procédé comprenant en outre :
après que le robot cible a ramené tous les conteneurs de travail à transporter vers l'entrepôt, ordonner au robot cible de se déplacer vers une zone de sortie de l'entrepôt pour stocker les conteneurs de travail à retirer de l'entrepôt.

8. Le procédé selon la revendication 7, sachant que, avant d'ordonner au robot cible de se déplacer vers la zone de sortie de l'entrepôt pour stocker les conteneurs de travail à retirer de l'entrepôt, le procédé comprend en outre :
la détection du fait que le robot cible a un compartiment de stockage vide ;
lorsqu'il est détecté que le robot cible a un compartiment de stockage vide, ordonner au robot cible de charger tous les conteneurs de travail à retirer de l'entrepôt qui n'ont pas été retirés de l'entrepôt jusqu'à ce qu'il n'y ait plus de compartiment de stockage vide dans le robot cible, et ordonner au robot cible de se déplacer vers la zone de sortie de l'entrepôt pour stocker les conteneurs de travail à retirer de l'entrepôt ;
sinon, ordonner au robot cible de se déplacer vers la zone de sortie de l'entrepôt pour stocker les conteneurs de travail à retirer de l'entrepôt.

9. Dispositif électronique comprenant :
une mémoire conçue pour stocker un programme informatique ;
un processeur conçu pour mettre en œuvre le procédé selon l'une des revendications 1 à 8, lorsque le programme stocké dans la mémoire est exécuté.

10. Support de stockage lisible par ordinateur, dans lequel est stocké un programme informatique qui, lorsqu'il est exécuté par un processeur, amène le processeur à mettre en œuvre le procédé selon l'une des revendications 1 à 8.
